(19) Europäisches Patentamt / European Patent Office / Office européen des brevets

(11) **EP 4 264 353 B1**

(12) **EUROPÄISCHE PATENTSCHRIFT**

(45) Veröffentlichungstag und Bekanntmachung des Hinweises auf die Patenterteilung:
**30.10.2024  Patentblatt 2024/44**

(21) Anmeldenummer: **21843699.6**

(22) Anmeldetag: **21.12.2021**

(51) Internationale Patentklassifikation (IPC):
**G02B 21/36** (2006.01)     **G02B 21/00** (2006.01)
**G01N 15/14** (2024.01)     **G06T 7/246** (2017.01)
**G01N 15/10** (2024.01)

(52) Gemeinsame Patentklassifikation (CPC):
**G02B 21/367; G01N 15/1425; G01N 15/1429;
G01N 15/1433; G01N 15/1434; G02B 21/0076;
G02B 21/008; G06T 7/246;** G01N 2015/1006;
G06T 2207/10056; G06T 2207/10064;
G06T 2207/30241

(86) Internationale Anmeldenummer:
**PCT/EP2021/086970**

(87) Internationale Veröffentlichungsnummer:
**WO 2022/136361 (30.06.2022 Gazette 2022/26)**

(54) **VERFAHREN UND MIKROSKOP ZUR AUFNAHME VON TRAJEKTORIEN EINZELNER PARTIKEL IN EINER PROBE**

METHOD AND MICROSCOPE FOR RECORDING TRAJECTORIES OF INDIVIDUAL PARTICLES IN A SAMPLE

PROCÉDÉ ET MICROSCOPE POUR ACQUÉRIR DES TRAJECTOIRES DE PARTICULES INDIVIDUELLES DANS UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2020   DE 102020134495**

(43) Veröffentlichungstag der Anmeldung:
**25.10.2023   Patentblatt 2023/43**

(73) Patentinhaber: **Abberior Instruments GmbH
37077 Göttingen (DE)**

(72) Erfinder:
• **HARKE, Benjamin**
  **37083 Göttingen (DE)**
• **KASTRUP, Lars**
  **37073 Göttingen (DE)**
• **WURM, Christian**
  **37077 Göttingen (DE)**

(56) Entgegenhaltungen:
**WO-A2-2009/098272      CN-A- 109 308 457
US-A1- 2021 341 725**

• **MARTÍNEZ-MUÑOZ LAURA ET AL: "Separating Actin-Dependent Chemokine Receptor Nanoclustering from Dimerization Indicates a Role for Clustering in CXCR4 Signaling and Function", MOLECULAR CELL, ELSEVIER, AMSTERDAM, NL, vol. 70, no. 1, 5 April 2018 (2018-04-05), pages 106, XP085371376, ISSN: 1097-2765, DOI: 10.1016/J.MOLCEL.2018.02.034**
• **FRANCISCO BALZAROTTI ET AL: "Supplementary Materials for Nanometer resolution imaging and tracking of fluorescent molecules with minimal photon fluxes", SCIENCE, vol. 355, no. 6325, 22 December 2016 (2016-12-22), US, pages 606 - 612, XP055767212, ISSN: 0036-8075, DOI: 10.1126/science.aak9913**

## Beschreibung

## Technisches Gebiet der Erfindung

Die Erfindung bezieht sich auf ein Verfahren zur zeitlichen Verfolgung einzelner Partikel in einer Probe nach dem MINFLUX-Prinzip. Die Erfindung bezieht sich weiter auf ein das Verfahren ausführendes Lichtmikroskop.

## Stand der Technik

Die Beobachtung und die Verfolgung einzelner Partikel in einer Probe (engl. *Single Particle Tracking,* SPT) ist eine wichtige Technik zur Untersuchung molekularer Dynamik in biologischen Systemen. Hierzu können lichtstreuende Partikel, beispielsweise metallische Nanopartikel, verwendet werden; meist werden jedoch fluoreszente Partikel oder einzelne Moleküle eines Fluoreszenzfarbstoffs eingesetzt. Mit Fluoreszenzfarbstoffen ist es auch möglich, ansonsten nicht detektierbare Partikel zu markieren und damit für die Partikelverfolgung zugänglich zu machen. Zu den biologischen Anwendungsgebieten gehören unter anderem die Untersuchung enzymkatalysierter Reaktionen, der DNA-Transkription, der Aktivität von Ionenkanälen und des *Vesicle Trafficking.*

Die Anwendbarkeit der eingesetzten Methoden hängt dabei maßgeblich vom erreichbaren Beobachtungszeitraum und der zeitlichen Auflösung bei der Beobachtung einzelner Partikel ab. Hierzu sind aus dem Stand der Technik mikroskopbasierte, abbildende Methoden einerseits und Punktdetektor-basierte Methoden andererseits bekannt. Erstere erlauben die Beobachtung einzelner Partikel über einen größeren Bildbereich und damit die Verfolgung auch frei diffundierender Partikel über vergleichsweise lange Zeiträume. Allerdings ist die erreichbare zeitliche Auflösung durch die Bildrate der Kamera begrenzt, weswegen eine Untersuchung schneller Prozesse mit diesem Ansatz nicht möglich ist.

Umgekehrt können mit Punktdetektor-basierten Methoden, insbesondere bei der Verwendung zeitaufgelöster Einzelphotonenzählung, hohe zeitliche Auflösungen bis in den Pikosekundenbereich erzielt werden, allerdings ist der Beobachtungszeitraum in vielen Anwendungen auf die Verweildauer einzelner Partikel im Fokus des Beleuchtungslichts begrenzt. Der Beobachtungszeitraum ist insbesondere dann kurz, wenn die Partikel frei diffundieren können. Um diese Begrenzung zu überwinden, werden zu verfolgende Partikel und insbesondere Einzelmoleküle oft immobilisiert, d. h. an einen ortsfesten Träger gebunden oder mittels optischer Pinzetten an einem Ort gehalten. Zur Verwendung mit optischen Pinzetten müssen einzelne Biomoleküle allerdings an (größere) Trägerpartikel gekoppelt werden, was Anwendungen in nativen, lebenden Systemen stark einschränkt.

Die Verlängerung des Beobachtungszeitraums eines einzelnen Partikels mit einem Einzelpunktdetektor ist alternativ möglich, indem das Molekül mit Hilfe eines verstellbaren Probenhalters und einem geschlossenen Regelkreis aktiv im Fokus gehalten wird. Die Verfolgung einzelner fluoreszenter Moleküle wurde erstmals von N. P. Wells et al. in "Time Resolved 3D Molecular Tracking in Live Cells", Nano Lett. 10, 4732 (2010) realisiert, wobei Cy5-dUTP-Moleküle in 92%igem Glycerin, also einem sehr viskosen Medium, über rund 100 ms in Echtzeit verfolgt werden konnten. Eine Anwendung der Methode in weniger viskosen (und damit praxisrelevanteren) Medien ist mit den in dieser Arbeit eingesetzten piezobasierten Verstellern zum Nachführen der Probe nicht möglich, da die Diffusionsgeschwindigkeit der Farbstoffmoleküle in weniger viskosen Medien erheblich höher ist, so dass einzelne Farbstoffmoleküle nicht mehr ausreichend schnell verfolgt werden können und den Fangbereich der Regelung zur Probennachführung schnell verlassen. Auch die zeitliche Maximallänge der Trajektorien ist mit rund 100 ms kurz, was insbesondere auf das begrenzte Photonenbudget, d. h. die limitierte Zahl von Fluoreszenzphotonen, die von einem Farbstoffmolekül bis zum endgültigen Ausbleichen abgegeben wird, zurückzuführen ist.

Zur schnelleren Verfolgung einzelner Partikel und insbesondere einzelner Farbstoffmoleküle stehen inzwischen schnelle Strahlablenkmittel, insbesondere elektrooptische oder akustooptische Deflektoren zur Verfügung, die eine Positionierzeit im (Sub-)Mikrosekundenbereich erreichen, allerdings auf einen Positionierbereich von wenigen Mikrometern beschränkt sind. Um einzelne Partikel in einem größeren Bereich der Probe abtasten zu können, können diese schnellen, nicht-mechanischen Abtastmittel mit Galvanometerspiegeln kombiniert werden, die eine (langsamere) Vorpositionierung des fokussierten Anregungslichts in einem großen Bereich der Probe ermöglichen.

Die Druckschrift DE 10 2011 055 367 A1 beschreibt eine unter dem Akronym MINFLUX bekannte Variante des *Single Particle Tracking,* bei der das Partikel mit einer ein Intensitätsminimum aufweisenden Lichtverteilung eines Abtastlichts beleuchtet und die von dem Partikel emittierten Photonen registriert werden. Das Minimum wird dem sich in der Probe bewegenden Partikel nachgeführt, indem die Intensitätsverteilung so gegenüber der Probe verschoben wird, dass die Rate der von dem Partikel emittierten Photonen minimal bleibt. Mit zunehmender Konfidenz der Lokalisierung können die Positionen des Intensitätsminimums zunehmend näher um das verfolgte Partikel angeordnet und die Leistung des Abtastlichts erhöht werden, wodurch eine weiter präzisierte Lokalisierung möglich wird.

Der besondere Vorteil des MINFLUX-Verfahrens liegt in seiner besonderen Photoneneffizienz, die eine genaue Lokalisierung einzelner Partikel bis in den einstelligen Nanometerbereich bereits mit einer vergleichsweise geringen Zahl von Photonen erlaubt. Da die Abtastung mit einem Intensitätsminimum - idealerweise einer Intensitätsnullstelle - der Lichtverteilung erfolgt und das Intensitätsminimum nur in einem Nahbereich um die Partikel positioniert wird, werden die Partikel mit nur geringer Lichtintensität beaufschlagt. Die quantitative Analyse [siehe K. Gwosch et al. in "MINFLUX nanoscopy delivers 3D multicolor nanometer resolution in cells", Nat. Methods 17, 217 (2020)] zeigt, dass die Standardabweichung $\sigma$ der Lokalisierungsgenauigkeit beim MINFLUX-Verfahren der Beziehung $\sigma \propto 1/N^{k/2}$ folgt, wobei $N$ die Anzahl der detektierten Photonen und $k$ die Anzahl der Iterationsschritte ist. Bereits mit vier Iterationen ist daher $\sigma \propto 1/N^2$, d. h. die Unsicherheit der Lokalisierung sinkt mit dem Quadrat der Anzahl von Photonen. Im Gegensatz dazu sinkt die Standardabweichung bei der Ortsbestimmung einzelner Partikel aus einem Weitfeldbild der Partikel (beispielsweise in der STORM-/PALM-Mikroskopie oder auch durch Abrastern mit einem gaußförmigen Lichtfokus) nur mit der Wurzel aus der Anzahl N der detektierten Photonen (

$$\sigma \propto 1/\sqrt{N}$$

). Aufgrund dieser besonderen Photoneneffizienz können auch von einzelnen fluoreszenten Farbstoffmolekülen, die nur eine sehr begrenzte Zahl von Fluoreszenzphotonen emittieren, bis sie irreversibel bleichen, nach dem MINFLUX-Verfahren wesentlich mehr Positionsbestimmungen durchgeführt werden als dies mit anderen Verfahren möglich ist.

Insbesondere bei der Verwendung schneller Abtastmittel können wiederholte Positionsbestimmungen einzelner Partikel in sehr kurzem Abstand erfolgen, mit dem aktuell verfügbaren Stand der Technik ca. alle 100 $\mu$s. Aufgrund der hohen Photoneneffizienz und der hohen Lokalisierungsgeschwindigkeit eignet sich das MINFLUX-Verfahren daher für die Echtzeit-Verfolgung einzelner fluoreszenter Farbstoffmoleküle in der Probe in besonderem Maß. Dabei ist ein Verfolgen einzelner Farbstoffmoleküle auch in niederviskosen Medien möglich. Aus dem Stand der Technik sind nach dem MINFLUX-Verfahren aufgenommene Trajektorien einzelner Farbstoffmoleküle mit mehr als 25.000 Einzelpositionsbestimmungen bekannt.

In der DE 10 2017 104 736 B3 ist eine Variante des MINFLUX-Verfahrens beschrieben, bei der das Abtasten der vereinzelt vorliegenden Fluoreszenzfarbstoffmoleküle nicht durch Beleuchten mit einer ein lokales Intensitätsminimum aufweisenden Intensitätsverteilung von Anregungslicht, sondern mit zwei im Wesentlichen komplementären Intensitätsverteilungen eines Anregungs-und eines Fluoreszenzverhinderungslichts erfolgt. Dabei weist die Intensitätsverteilung des Anregungslichts ein lokales Intensitätsmaximum auf, während die Intensitätsverteilung des Fluoreszenzverhinderungslichts an derselben Stelle ein lokales Intensitätsminimum aufweist. Bei dem Fluoreszenzverhinderungslicht kann es sich konkret um STED-Licht handeln, das in den Randbereichen der Intensitätsverteilung des Anregungslichts angeregte Fluoreszenzfarbstoffmoleküle durch Auslösen stimulierter Emission an der Aussendung von Fluoreszenzphotonen hindert. Auch in dieser Ausführungsform des MINFLUX-Verfahrens hängt die Intensität der von dem Farbstoffmolekül emittierten Fluoreszenz vom Abstand zu dem lokalen Intensitätsminimum des Fluoreszenzverhinderungslichts ab, allerdings nimmt die Fluoreszenz hier mit zunehmendem Abstand vom Intensitätsminimum nicht zu, sondern ab. Eine experimentelle Umsetzung dieses Konzepts wurde durch M. Weber et al. in "MINSTED fluorescence localization and nanoscopy", bioRxiv, doi: 10.1101/2020.10.31.363424 (2020) beschrieben.

Der Artikel "Separating Actin-Dependent Chemokine Receptor Nanoclustering from Dimerization Indicates a Role for Clustering in CXCR4 Signaling and Function" von L. Martinez-Muñoz et al. (2018, Mol. Cell 70, 106-119) beschreibt STED-Mikroskopie- und Einzelpartikel-Verfolgungsexperimente an biologischen Zellen zur Analyse von Nanoclustern an Chemokin-Rezeptoren.

Die Patentanmeldung WO 2009/098272 A2 beschreibt eine Flusszelle, in der sich bewegende Objekte mikroskopisch beobachtet werden können, wobei durch Bildanalyse mittels einer Wahrscheinlichkeitsfunktion Trajektorien der Objekte bestimmt werden können.

Die Patentanmeldung CN109308357A beschreibt ein Verfahren, bei dem mittels eines digitalen holographischen Mikroskops ein holographisches Bild von Partikeln in einer Probe aufgenommen wird, ein Hintergrundbild berechnet wird, das Hintergrundbild von dem holographischen Bild abgezogen wird, eine dreidimensionale Position eines Partikels unter Verwendung einer Lichtintensitätsschwelle und durch Auffinden einer lokalen maximalen Intensität ermittelt wird, Partikelpositionen mit einem Nearest-Neighbor-Algorithmus zu einer Trajektorie verbunden werden, eine erste und eine zweite Trajektorie ausgewählt werden, wobei wenn ermittelt wurde, dass die Trajektorien identisch sind, fehlende Partikelpositionen zwischen der ersten Trajektorie und der zweiten Trajektorie vervollständigt werden, ein Fehlerkorrekturabstand gesetzt wird und ermittelt wird, ob die Zuordnung der ersten Trajektorie und der zweiten Trajektorie korrekt ist. Während lange Trajektorien einzelner Partikel mit vielen Positionsbestimmungen grundsätzlich wünschenswert sind, stellt sich allerdings die Frage, ob die Trajektorien für eine gegebene Fragestellung in ihrer gesamten Länge aussagekräftige Informationen enthalten. Beispielsweise liefert eine Untersuchung einer möglichen Wechselwirkung zwischen einem verfolgten Partikel und einer Bindungsstelle in der Probe keine relevanten Informationen, wenn der Abstand zwischen Partikel und der Bindungsstelle zu groß wird. Auch sind aus einer Trajektorie abgeleitete Informationen möglicherweise irrelevant oder sogar irreführend, wenn während der Aufnahme der Trajektorie die Zelle in einen nichtrepräsentativen Zustand übergeht (z. B. durch Zellteilung oder Apoptose). Überflüssige Abtastungen führen zudem zu einer vermeidbaren Belastung der Probe mit dem Abtastlicht und zu einer unnötig langen Messdauer.

## Aufgabe der Erfindung

Die Aufgabe der Erfindung besteht daher darin, ein Verfahren und ein Lichtmikroskop zum Verfolgen der Bewegung eines einzelnen Partikels in einer Probe aufzuzeigen, bei denen das Verfolgen des Partikels unterbrochen oder abgebrochen wird, wenn das Verfolgen des Partikels keine für eine gegebene Fragestellung relevante Information mehr liefert. Die Aufgabe des erfindungsgemäßen Verfahrens und des Lichtmikroskops besteht also darin, eine Methode aufzuzeigen, die ein geeignetes Abbruchkriterium für das Verfolgen des Partikels definiert.

## Lösung

Die Aufgabe der Erfindung wird durch ein Verfahren nach dem unabhängigen Anspruch 1 und durch ein Lichtmikroskop nach dem unabhängigen Anspruch 15 gelöst. Die abhängigen Ansprüche 2 bis 14 betreffen bevorzugte Ausführungsformen des Verfahrens.

## Beschreibung der Erfindung

Der Erfindung liegt die Idee zu Grunde, dass beim Verfolgen der Bewegung eines Partikels in der Probe eine Entscheidung darüber, welche Abschnitte der aufgenommenen Trajektorie zur Beantwortung einer gegebenen Fragestellung relevante Informationen enthalten, oft nicht aus den Datenpunkten der Trajektorie allein getroffen werden kann, sondern dass hierzu weitere Informationen über den Kontext in der Probe erforderlich sind. Dieser Kontext kann eine räumliche Information über die (unmittelbare) Umgebung des gerade verfolgten Partikels sein oder auch eine funktionale Information, die den funktionalen Zustand beispielsweise einer Zellorganelle (z.B. der Öffnungszustand eines Ionenkanals) oder der Zelle als Ganzes kennzeichnet.

Hierzu umfasst die Erfindung ein Verfahren zur Aufnahme einer Trajektorie, also einer zeitaufgelösten Ortskurve eines einzelnen Partikels in einer Probe, wobei eine zweite Messgröße in der Probe erfasst wird und die Aufnahme der Trajektorie unterbrochen oder beendet wird, wenn die zweite Messgröße oder ein aus der zweiten Messgröße berechneter Kontrollwert ein Abbruchkriterium erfüllt. Eine solche rechtzeitige Beendigung der Aufnahme einer Trajektorie ist sowohl zeit- als auch photoneneffizient.

Als zu verfolgende Partikel können dabei lichtstreuende Partikel verwendet werden, beispielsweise metallische Nanopartikel, Silica- oder Latex-Nanopartikel, oder - in vielen Anwendungen bevorzugt - fluoreszente Partikel. Der Begriff der fluoreszenten Partikel ist hier in einem breiten Sinne aufzufassen; fluoreszente Partikel sind beispielsweise auch mit einem Fluoreszenzfarbstoff markierte Einzelmoleküle eines Reagenzes, eines Liganden, eines Wirkstoffs oder eines Biomoleküls (z. B. Proteins, DNA, Lipids), aber auch fluoreszenzmarkierte supramolekulare Strukturen, Aggregate oder Molekülkomplexe wie Mizellen, Vesikel oder *Lipid Rafts.* Unter fluoreszenten Partikeln sind insbesondere auch molekulare Fluorophore, also einzelne Moleküle fluoreszenter Farbstoffe und fluoreszente Quantenpunkte (engl. *quantum dots,* Qdots) zu verstehen. Entscheidend ist, dass die Partikel in Form diskreter und weitgehend identischer Einheiten auftreten.

Zur Durchführung des erfindungsgemäßen Verfahrens ist sicherzustellen, dass die Partikel vereinzelt vorliegen, der Abstand benachbarter Partikel also oberhalb der optischen Beugungsgrenze liegt, so dass benachbarte Partikel in einer optischen Abbildung als getrennte Objekte identifiziert werden können. Das Abstandserfordernis kann beispielsweise dadurch erfüllt werden, dass die Partikel in einer so geringen Konzentration eingesetzt werden, dass sie im statistischen Mittel einen ausreichenden Abstand voneinander aufweisen. Räumlich vereinzelte fluoreszente Moleküle eines Fluoreszenzfarbstoffs können auch durch Fotoaktivierung und / oder Fotodeaktivierung erzeugt werden, wenn der Fluoreszenzfarbstoff lichtinduziert zwischen einem fluoreszenten Zustand und einem nichtfluoreszenten Zustand in zumindest einer Richtung konvertiert werden kann. Durch eine Fotoaktivierung einer sehr kleinen Zahl von fluoreszenten Farbstoffmolekülen oder einer Fotodeaktivierung des Großteils der fluoreszenten Farbstoffmoleküle kann so eine kleine Zahl von Farbstoffmolekülen im fluoreszenten Zustand präpariert werden, die den erforderlichen Abstand voneinander aufweisen. Das Abstandserfordernis gilt dabei auch für Moleküle unterschiedlicher Fluoreszenzfarbstoffe, die mit Anregungslicht der gleichen Wellenlänge zur Fluoreszenz in einem gleichen Fluoreszenzwellenlängenbereich angeregt werden können. Bezüglich geeigneter Verfahren zum Vereinzeln fluoreszenter Farbstoffmoleküle in einer Probe kann der Fachmann auf umfassenden Stand der Technik zur Lokalisationsmikroskopie (PALM, STORM und verwandte Methoden) zurückgreifen.

Zur Aufnahme der Trajektorie eines einzelnen Partikels nach dem erfindungsgemäßen Verfahren ist eine Kenntnis seiner initialen Position bei Beginn der Messung zumindest näherungsweise erforderlich. Initiale Koordinaten können beispielsweise durch Abscannen der Probe mit fokussiertem Licht in einem konventionellen Laserscanning oder aus einem zuvor aufgenommenen Weitfeldbild erfolgen; konkrete Verfahren hierzu finden sich ebenfalls im Stand der Technik zur PALM-, STORM- und MINFLUX-Mikroskopie.

Ausgehend von den initial bestimmten Koordinaten des Partikels wird dieses mit einem Abtastlicht an einer oder mehreren Abtastpositionen abgetastet, wobei die Intensitätsverteilung des Abtastlichts in der Probe ein lokales Intensitätsminimum - idealerweise eine Intensitätsnullstelle - aufweist. Wenn im Folgenden von einer Abtastposition die Rede ist, dann ist damit die Position dieses lokalen Minimums gemeint. Bei der Beleuchtung mit dem Abtastlicht erzeugt das zu verfolgende Partikel ein detektierbares Lichtsignal, beispielsweise ein Streulichtsignal im Falle lichtstreuender Partikel oder ein Fluoreszenzsignal im Falle fluoreszenter Partikel.

Beim Abtasten des Partikels mit dem Abtastlicht wird an jeder Abtastposition ein Lichtsignal in Form einer Anzahl von oder einer Intensität als eine erste Messgröße detektiert. Abhängig davon, ob sich das Partikel im Zentrum einer Abtastposition und damit im Intensitätsminimum oder nahe des Intensitätsminimums des Abtastlichts befindet oder ob es weiter vom Intensitätsminimum entfernt liegt und damit einer höheren Intensität des Abtastlichts ausgesetzt ist, fällt das detektierte Lichtsignal niedriger oder höher aus. Die detektierte Photonenzahl oder Lichtintensität stellt insofern ein Maß für den Abstand des Partikels vom Intensitätsminimum dar und dient der Bestimmung nachfolgender Abtastpositionen und aktualisierter Koordinaten des abgetasteten Partikels. Die Bestimmung aktualisierter Koordinaten des Partikels kann dabei nach jeweils einer festen oder einer variablen, d. h. im Laufe des Abtastens angepassten Anzahl von Abtastpositionen, nach jeder einzelnen Abtastposition oder sogar nach jedem detektierten Photon erfolgen. Durch die wiederholte Lokalisierung des Partikels und die Neufestlegung der folgenden Abtastposition(en) folgt die Abtastung der Bewegung des Partikels in der Probe und bildet damit die Trajektorie des Partikels nach.

Die zuvor beschriebenen Verfahrensschritte entsprechen im Wesentlichen dem aus dem Stand der Technik bekannten Verfahren zur Einzelmolekülverfolgung nach dem *MINFLUX-Verfahren* wie es beispielsweise von F. Balzarotti et al. in "Nanometer resolution imaging and tracking of fluorescent molecules with minimal photon fluxes", Science 355, 606 (2017) beschrieben ist.

Das erfindungsgemäße Verfahren unterscheidet sich vom Stand der Technik nun dadurch, dass während der Aufnahme der Trajektorie des Partikels eine zweite Messgröße in der Probe erfasst wird und die Aufnahme der Trajektorie unterbrochen oder beendet wird, wenn die zweite Messgröße oder ein aus der zweiten Messgröße berechneter Kontrollwert ein Abbruchkriterium erfüllt. Im einfachsten Fall besteht das Abbruchkriterium darin, dass die zweite Messgröße oder der Kontrollwert einen Minimalwert unterschreitet oder einen Maximalwert überschreitet. Optional kann das Abtasten fortgesetzt werden, wenn die zweite Messgröße oder der Kontrollwert den Minimalwert wieder überschreitet bzw. den Maximalwert wieder unterschreitet, wobei in der Praxis eine Hysterese vorgesehen sein kann. Als Abbruchkriterium können auch komplexere Kriterien festgelegt werden, insbesondere auch unter Berücksichtigung der Historie der zweiten Messgröße.

Erfindungsgemäß wird die zweite Messgröße während der Aufnahme der Trajektorie an einem Ort in der Probe detektiert, wobei die Detektion kontinuierlich, also asynchron zur Abtastung des Partikels erfolgen oder in den Abtastvorgang des Partikels integriert sein kann. Wenngleich nicht zwingend erforderlich, wird die zweite Messgröße dabei bevorzugt zumindest einmal pro Aktualisierung der Partikel-Koordinaten erfasst. Die Detektion der zweiten Messgröße kann punktförmig an den jeweils aktuellen Koordinaten des Partikels oder an der jeweils aktuellen Abtastposition erfolgen, es ist aber auch möglich, die zweite Messgröße in einem ausgedehnten Bereich in der Probe zu erfassen und über diesen Bereich zu mitteln, beispielsweise in einer Umgebung der zuletzt bestimmten Koordinaten des Partikels oder in einem festen, zuvor festgelegten Bereich in der Probe. Dieser Bereich kann zum Beispiel durch die Kontur einer Zelle oder einer Zellorganelle, beispielsweise des Zellkerns, festgelegt sein.

Der Zweck des Abbruchkriteriums besteht darin, die Aufnahme der Trajektorie zu beenden oder zumindest temporär zu unterbrechen, beispielsweise wenn weitere Lokalisierungen des beobachteten Partikels keine für eine gegebene Fragestellung relevanten Informationen (mehr) liefern oder wenn sich die Probe so verändert, dass die aus weiteren Lokalisierungen abgeleiteten Informationen nicht mehr mit denen aus früheren Lokalisierungen abgeleiteten Informationen vergleichbar sind, also für das Experiment keine Aussagekraft mehr besitzen oder sogar zu falschen Schlüssen führen können. Durch die parallele Detektion der zweiten Messgröße und die Anwendung eines Abbruchkriteriums können überflüssige Abtastungen und damit eine unnötige Belastung der Probe mit dem Abtastlicht vermieden werden. Gleichzeitig kann die Messdauer reduziert werden, oder es können in einer gegebenen Zeit Trajektorien von mehr Partikeln aufgenommen werden. Für viele Fragestellungen, die eine statistische Analyse einer großen Zahl von Trajektorien erfordern, können durch diesen Zeitvorteil größere Datensätze aufgenommen and analysiert werden, ohne dass sich die Messdauer dadurch insgesamt verlängert.

In einer bevorzugten Ausführungsform des erfindungsgemäßen Verfahrens wird das Partikel für jede Positionsbestimmung an mehreren Abtastpositionen in einem Nahbereich von typischerweise ≤ 250 nm um die zuletzt bestimmten Koordinaten des Partikels abgetastet, wobei das durch die Abtastpositionen gebildete Polygon (im zweidimensionalen Fall) bzw. Polyeder (im dreidimensionalen Fall) die zuletzt bestimmten Partikel-Koordinaten einschließt. Dadurch ist sichergestellt, dass eine eindeutige Lokalisierung des Partikels möglich ist. Die an den Abtastpositionen durch das Partikel emittierte Photonenzahl oder Lichtintensität erlaubt eine Berechnung aktualisierter Koordinaten des Partikels; hierzu kann der Fachmann auf bekannte Verfahren und Algorithmen aus dem Stand der Technik (insbesondere zur MINFLUX-Technologie) zurückgreifen. Die beschriebenen Schritte werden wiederholt ausgeführt, d. h. es werden weitere Abtastpositionen in einem Nahbereich um die jeweils aktuellen Koordinaten festgelegt, das Partikel an den neu festgelegten Abtastpositionen mit dem Abtastlicht abgetastet, an jeder der Abtastpositionen von dem Partikel emittiertes Licht registriert, und es werden aktualisierte Koordinaten bestimmt. Die Festlegung der jeweils nachfolgenden Abtastpositionen nach jedem Lokalisierungsschritt erfolgt dabei auf Basis der zuletzt bestimmten Koordinaten des Partikels. Optional kann auch die optische Leistung des Abtastlichts erhöht werden. Durch die wiederholte Lokalisierung des Partikels und die Neufestlegung der Abtastpositionen folgt die Abtastung der Bewegung des Farbstoffmoleküls in der Probe und bildet damit die Trajektorie des Partikels ab.

In einer alternativen Ausführungsform werden nach jeder Abtastung des Partikels an einer Abtastposition aktualisierte Koordinaten des Partikels und die nachfolgende Abtastposition bestimmt. Eine vollständige Lokalisierung des Partikels allein aus den an einer einzelnen Abtastposition detektierten Photonen ist dabei nicht möglich; allerdings kann auf Basis der Abtasthistorie, der relativen Lage des Intensitätsminimums zu der vermuteten aktuellen Position des Partikels und der an der aktuellen Abtastposition detektierten Photonenzahl oder Lichtintensität darauf geschlossen werden, in welche Richtung die Abtastposition verschoben werden muss.

Die Festlegung der Abtastpositionen und der Intensität des Abtastlichts ist in hohem Maße von der Diffusions- oder Transportgeschwindigkeit des Partikels in der Probe und der Frequenz, mit der das Partikel lokalisiert werden kann, abhängig. Während eine möglichst dichte Anordnung der Abtastpositionen um die jeweils aktuelle Position des Partikels und eine hohe optische Leistung des Abtastlichts eine präzise Lokalisierung erlaubt und daher erstrebenswert ist, steigt dabei gleichzeitig die Gefahr, dass das Partikel zwischen aufeinanderfolgenden Lokalisierungen den Fangbereich der Lokalisierung verlässt. Während bei der Lokalisierung statischer, unbeweglicher Farbstoffmoleküle die Abtastpositionen sukzessive näher an den Ort des Farbstoffmoleküls verlagert, die optische Leistung des Abtastlichts erhöht und damit die Lokalisierungsgenauigkeit erhöht werden können, ist dies bei der Verfolgung in Bewegung befindlicher Partikel nicht beliebig möglich. Vielmehr müssen die Abtastpositionen und die optische Leistung des Abtastlichts so angepasst werden, dass das Partikel zwischen aufeinanderfolgenden Lokalisierungen innerhalb des Fangradius bleibt. Dabei gilt, dass die Abtastpositionen umso dichter um das Partikel angeordnet werden können und die optische Leistung des Abtastlichts umso höher eingestellt werden kann, je höher die Lokalisierungsfrequenz und je geringer die Bewegungsgeschwindigkeit der Partikel ist. Eine Anpassung beider Parameter kann auch zwischen aufeinanderfolgenden Lokalisierungen, d. h. während der Aufnahme der Trajektorie erfolgen.

In einer bevorzugten Ausführungsform des erfindungsgemäßen Verfahrens ist die zweite Messgröße eine optische Messgröße, insbesondere ein in einem zweiten Detektionskanal detektiertes Fluoreszenzsignal. Dieses Fluoreszenzsignal kann von einem (weiteren) Fluoreszenzfarbstoff in der Probe stammen und insbesondere zur Markierung einer Struktur in der Probe dienen. Es kann sich aber auch um ein Autofluoreszenzsignal, also ein intrinsisches Fluoreszenzsignal einer Zelle, handeln. Wenn beispielsweise der Zellkern, die Zellmembran, eine Zellorganelle, ein Strukturprotein, ein Ionenkanal, ein *Lipid Raft* oder eine andere Struktur einer in der Probe befindlichen Zelle mit einem (weiteren) Fluoreszenzfarbstoff gefärbt ist, so liefert dessen Fluoreszenz eine Kontextinformation bei der Verfolgung einzelner Partikel in der Probe. Das Nichtvorhandensein dieser Färbung bzw. das Unterschreiten eines Mindestfluoreszenzsignals dieser Färbung am Ort eines abgetasteten Partikels kann beispielsweise anzeigen, dass sich das abgetastete Partikel außerhalb einer Zelle oder eines interessierenden Bereichs in einer Zelle befindet (bzw. diesen Bereich verlassen hat) und kann daher als Abbruchkriterium für das Verfolgen des Partikels dienen. Zur Untersuchung von Ligand-Rezeptor-Interaktionen können beispielsweise der Ligand und der Rezeptor mit verschiedenen Fluoreszenzfarbstoffen angefärbt und einzelne Moleküle des fluoreszenzmarkierten Liganden nach dem erfindungsgemäßen Verfahren in der Probe verfolgt werden. Dabei kann die Verfolgung einzelner fluoreszenzmarkierter Ligandenmoleküle auf Zeiträume beschränkt werden, während derer sich - wie durch das Fluoreszenz(kontroll)signal des Rezeptors angezeigt - der Ligand in der unmittelbaren Nähe eines Rezeptors befindet und mit diesem interagieren kann. Die Verfolgung kann abgebrochen werden, wenn der Kontrollwert anzeigt, dass sich das Ligandenmolekül von dem entsprechenden Rezeptor entfernt hat.

Das Abbruchkriterium muss nicht notwendigerweise direkt auf der zweiten Messgröße definiert sein, sondern kann auch auf einen aus der zweiten Messgröße berechneten Kontrollwert bezogen sein, in dessen Berechnung gegebenenfalls weitere Messgrößen eingehen können.

Insbesondere kann der Kontrollwert aus einem Fluoreszenzverhältnis in zwei Detektionskanälen berechnet werden, in denen die Fluoreszenz in unterschiedlichen Detektionswellenlängenbereichen detektiert wird. Eine vorteilhafte Ausführungsform ergibt sich dabei, wenn die Fluoreszenz ratiometrischer Indikatorfarbstoffe für die Berechnung des Kontrollwerts verwendet wird. Das Verhältnis der Fluoreszenzsignale derartiger Indikatorfarbstoffe in zwei Wellenlängenbereichen kann beispielsweise Auskunft geben über Ionenkonzentrationen (insbesondere Calcium-, Magnesium-, Zink- und Natriumionen), pH-Werte oder Membranpotenziale. Ein auf einen derartigen Kontrollwert bezogenes Abbruchkriterium erlaubt die Beschränkung der Einzelpartikelverfolgung nicht nur auf räumlich begrenzte Bereiche in Probe, sondern auch auf bestimmte funktionale Zustände einer Zelle oder Zellorganelle, z. B. den Öffnungszustand eines Ionenkanals oder die Unversehrtheit einer Zellmembran. Mit geeigneten Indikatorfarbstoffen bzw. fluoreszenzbasierten Reagenzien (z. B. Fluoreszenz-Ubiquitinations-Zellzyklus-Indikator, FUCCI) lässt sich auch der Status von Zellen bezüglich der Zellzyklus-Progression und -Teilung oder die Zellviabilität bzw. Zellvitalität (beispielsweise LIVE / DEAD Assays, ThermoFisher Scientific) beurteilen. Dabei können fluoreszierende Doppelfärbungen zum gleichzeitigen Nachweis sowohl von Apoptose als auch Nekrose zum Einsatz kommen, so dass Zellen je nach Fluoreszenzsignal in einem oder beiden Fluoreszenzkanälen als tot, nekrotisch oder apoptotisch klassifiziert werden können. Wenn der Kontrollwert aus der Fluoreszenz eines oder mehrerer dieser fluoreszenten Zellstatus-, Vitalitäts- bzw. Viabilitätsmarker abgeleitet wird, lässt sich das Verfolgen einzelner fluoreszenter Partikel nach dem erfindungsgemäßen Verfahren auf intakte Zellen bzw. auf Beobachtungszeiträume beschränken, in denen die beobachteten Zellen als gesund eingestuft werden können oder sich in einer bestimmten Phase des Zellzyklus befinden. Auf diese Weise können Fehlinterpretationen von Messdaten vermieden werden, die möglicherweise aus der Aufnahme nichtrepräsentativer Daten entstehen.

Neben der Fluoreszenzintensität können auch andere Parameter der Fluoreszenzemission zur Definition eines Abbruchkriteriums herangezogen werden, insbesondere die Fluoreszenzlebensdauer oder die Fluoreszanzanisotropie. Diese Parameter sind oft sensitiv für Änderungen des Bindungszustands oder der molekularen Umgebung eines Farbstoffmoleküls oder eines mit dem Fluoreszenzfarbstoff markierten Moleküls oder Partikels infolge reduzierter Mobilität oder der Veränderung möglicher Reaktionspfade der Fluoreszenzlöschung.

Bei der Verwendung fluoreszenter Partikel kann auch eine alternative Ausführungsform des erfindungsgemäßen Verfahrens gewählt werden, bei der das Abtastlicht durch eine aus der STED-Mikroskopie bekannte Überlagerung von Anregungslicht und eine das lokale Intensitätsminimum aufweisende Intensitätsverteilung eines Fluoreszenzverhinderungslichts gebildet wird, die eine Fluoreszenzemission aus fokalen Randbereichen verhindert. Unter Fluoreszenzverhinderungslicht ist dabei jede Art von Licht zu verstehen, das die Fluoreszenzemission der fluoreszenten Partikel verhindert, reduziert oder gänzlich unterdrückt. Insbesondere kann das Fluoreszenzverhinderungslicht Stimulationslicht sein, das eine stimulierte Emission elektronisch angeregter Farbstoffmoleküle induziert, wodurch die Farbstoffmoleküle (zurück) in den elektronischen Grundzustand überführt und so an einer spontanen Fluoreszenzemission gehindert werden. Auch in dieser Konfiguration liefert das Abtasten einzelner fluoreszenter Partikel ein vom Abstand des Partikels vom Intensitätsminimum des Fluoreszenzverhinderungslichts abhängiges Fluoreszenzsignal. Dabei ist die Abhängigkeit der Signalstärke vom Abstand allerdings invers, d. h. das Fluoreszenzsignal nimmt mit zunehmendem Abstand vom Intensitätsminimum des Fluoreszenzverhinderungslichts ab.

Außer der Fluoreszenz kann die zweite Messgröße zur Ableitung des Abbruchkriteriums auch eine andere optische Messgröße sein, insbesondere ein *Second-Harmonic-Generation-Signal* (SHG), ein *Third-Harmonic-Generation-Signal* (THG), ein Rayleigh- oder Raman-Streulichtsignal, ein *Coherent Anti-Stokes Raman Scattering-Signal* (CARS), ein Reflexionslichtsignal, ein Differentialinterferenzkontrastsignal (DIC) oder ein Polarisationskontrastsignal. Der Vorteil bei der Nutzung einer dieser optischen Messgrößen zur Festlegung eines Abbruchkriteriums besteht darin, dass keine (weitere) Färbung der Probe mit einem Fluoreszenzmarker erforderlich ist und dass diese Signale nicht einem Fotobleichen unterliegen. Wenngleich mit diesen Kontrastmodalitäten nicht eine einer gezielten Fluoreszenzmarkierung vergleichbare Spezifität erreicht werden kann, zeigen einige der Kontrastmodalitäten trotzdem eine gewisse Selektivität. Beispielsweise entstehen SHG-Signale nicht an Strukturen mit einem molekularen Symmetriezentrum, wohingegen bestimmte nicht-zentrosymmetrische Strukturen (z. B. Collagen, Myosin, Tubulin) im SHG-Kontrast ein besonders hohes Signal liefern.

Zur Generierung einer zweiten optischen Messgröße wird die Probe in der Regel zusätzlich zum Abtastlicht mit weiterem Licht beleuchtet, das in seinen Eigenschaften auf die jeweilige Kontrastmodalität und / oder auf das Abtastlicht abgestimmt ist. Dabei sollte das weitere Licht selektiv das Signal der zweiten optischen Messgröße, nicht aber die Emission von Photonen durch die verfolgten Partikel anregen. Daher unterscheidet sich das weitere Licht im Normalfall in seiner Wellenlänge vom Abtastlicht. Bei der Nutzung eines SHG- oder THG-Signals als zweite Messgröße liegt die Wellenlänge zur Anregung dieser Signale meist im roten bzw. infraroten Spektralbereich, so dass eine Entkopplung vom Abtastlicht, das eine Fluoreszenz oder eine Lichtstreuung durch die Partikel erzeugt, einfach möglich ist. Das Licht zur Anregung der zweiten Messgröße kann zusammen mit dem Abtastlicht durch ein einziges Objektiv in die Probe gerichtet werden; es ist aber auch möglich, die Probe durch eine separate Optik mit dem zusätzlichen Anregungslicht zu beleuchten. Diese separate Optik kann ein zweites Objektiv sein, das dem Objektiv zur Beleuchtung der Probe mit dem Abtastlicht gegenübersteht oder in einem Winkel zu diesem angeordnet ist, so dass das Abtastlicht und das zusätzliche Anregungslicht zur Generierung der zweiten Messgröße sich in der Probe kreuzen. Dabei schneiden sich die Strahlen in einem Winkel zwischen 15° und 165°, bevorzugt in einem Winkel zwischen 45° und 135° und besonders bevorzugt in einem Winkel zwischen 80° und 100°. Bei einer derartigen Beleuchtung der Probe (wie sie beispielsweise in einem Lichtblattmikroskop realisiert ist) kann die Belastung der Probe mit dem zusätzlichen Anregungslicht reduziert, die räumliche Auflösung der zweiten Messgröße verbessert und ein durch das zusätzliche Anregungslicht beim Abtasten der Probe entstehender Signalhintergrund reduziert werden. Daher wird gemäß einer Ausführungsform das als zweite Messgröße detektierte Signal durch Beleuchten der Probe mit Licht generiert, das in einem Winkel zwischen 15° und 165°, bevorzugt in einem Winkel zwischen 45° und 135°, besonders bevorzugt in einem Winkel zwischen 80° und 100° zur Einstrahlrichtung des Abtastlichts in die Probe eingestrahlt wird.

Die zweite Messgröße kann auch eine nicht-optische Größe sein. Diese Größe kann beispielsweise eine elektrische Messgröße, insbesondere eine elektrische Spannung, ein elektrischer Strom, ein elektrischer Widerstand, eine elektrische Kapazität, eine elektrische Induktivität oder eine Frequenz, eine Phase oder eine Amplitude einer elektrischen Spannung, eines elektrischen Stroms oder eines elektromagnetischen Wechselfeldes sein. Ein elektrischer Strom in einer Probe kann beispielsweise in einer *Patch* Clamp-Anordnung gemessen werden, bei der mit einer Mikropipette ein einzelner Ionenkanal in der Zellmembran einer zu untersuchenden Zelle vom umgebenden Medium elektrisch isoliert und der Strom durch den Ionenkanal mit einer Elektrode gemessen wird. Nach Verstärkung und Aufbereitung des detektierten Stroms mit einem empfindlichen Messverstärker zu einem Kontrollwert kann auf Basis dieses Kontrollwerts ein Abbruchkriterium zur Durchführung des erfindungsgemäßen Verfahrens festgelegt werden.

Die Erfindung bezieht sich weiterhin auf ein Lichtmikroskop, das dazu eingerichtet ist, das erfindungsgemäße Verfahren auszuführen. Hierzu umfasst das Lichtmikroskop ein Objektiv und eine Lichtquelle für Abtastlicht, mit dem das Partikel in einer Probe zur Abgabe von Photonen angeregt werden kann. Erfindungsgemäß weist das Abtastlicht in der Probe ein lokales Intensitätsminimum auf, das mit Hilfe von im Strahlengang des Abtastlichts angeordneten Strahlformungsmitteln erzeugt wird. Derartige Strahlformungsmittel sind dem Fachmann aus dem Stand der Technik bekannt; exemplarisch seien hier Phasenfilter oder programmierbare Phasenmodulatoren (engl. *Spatial Light Modulator,* SLM) genannt, die beispielsweise auch in der STED-Mikroskopie eingesetzt werden. Das Lichtmikroskop umfasst weiter eine Abtastvorrichtung, mit der das Abtastlicht in der Probe positioniert und Partikel in der Probe an verschiedenen Abtastpositionen abgetastet werden können.

Das Lichtmikroskop verfügt über einen Detektionskanal, der eine erste, optische Messgröße aus der Probe erfasst. Diese optische Messgröße ist das von dem zu verfolgenden Partikel infolge der Beleuchtung mit dem Abtastlicht emittierte Lichtsignal, typischerweise also ein Streulichtsignal oder ein Fluoreszenzsignal. Als Detektor eignet sich hierzu insbesondere eine im Photonenzählmodus betriebene Avalanche-Fotodiode, die eine besonders hohe Sensitivität aufweisen kann. Als Detektor kann aber auch ein analoger Fotomultiplier eingesetzt werden, solange dieser über eine ausreichende Sensitivität für die Einzelmoleküldetektion verfügt. Erfindungsgemäß weist das Lichtmikroskop außerdem einen Detektionskanal zur Erfassung einer zweiten Messgröße in der Probe auf; diese zweite Messgröße dient zur Festlegung des Abbruchkriteriums bei der Ausführung des erfindungsgemäßen Verfahrens.

Sofern das Lichtmikroskop zur Aufnahme von Bewegungstrajektorien fluoreszenter Partikel eingerichtet ist, es sich mithin um ein Fluoreszenzmikroskop handelt, umfasst das Abtastlicht zumindest ein Fluoreszenzanregungslicht, mit dem die Partikel zur Fluoreszenz angeregt werden können bzw. das Abtastlicht ist als ein Fluoreszenzanregungslicht ausgebildet. Eine besondere Ausführungsform ergibt sich, wenn das Abtastlicht durch Überlagerung des Fluoreszanregungslichts und einem Fluoreszenzverhinderungslicht aus einer weiteren Lichtquelle gebildet wird, wobei (nur) das Fluoreszenzverhinderungslicht das lokale Intensitätsminimum in der Probe, also die Intensitätsverteilung mit dem lokalen Intensitätsminimum, aufweist. Unter Fluoreszenzverhinderungslicht ist wie zuvor jede Art von Licht zu verstehen, das geeignet ist, die Fluoreszenzemission eines Fluoreszenzfarbstoffs zu verhindern, zu reduzieren oder gänzlich zu unterdrücken. Insbesondere kann das Fluoreszenzverhinderungslicht Stimulationslicht sein, das eine stimulierte Emission elektronisch angeregter Farbstoffmoleküle induziert. Auch in der letztgenannten Ausführungsform liefert das Abtasten einzelner fluoreszenter Partikel ein vom Abstand des Partikels vom Intensitätsminimum des Fluoreszenzverhinderungslichts abhängiges Fluoreszenzsignal; dabei ist die Abhängigkeit der Signalstärke vom Abstand allerdings invers, d. h. das Fluoreszenzsignal nimmt mit zunehmendem Abstand vom Intensitätsminimum des Fluoreszenzverhinderungslichts ab.

Wenn das Lichtmikroskop zur Aufnahme von Bewegungstrajektorien lichtstreuender Partikel eingerichtet ist, so dient das Abtastlicht zur Erzeugung eines Streulichtsignals an den Partikeln, wobei das Streulichtsignal die gleiche Wellenlänge wie das Abtastlicht (Rayleigh-Streuung) oder eine zum Abtastlicht verschobene Wellenlänge (Rayleigh-Streuung, kohärente anti-Stokes Raman-Streuung) aufweisen kann. Das Lichtmikroskop kann auch mehrere Kontrastmodi aufweisen, die parallel oder alternativ genutzt werden können.

Um das Potenzial des Verfahrens hinsichtlich der erzielbaren Lokalisationsgenauigkeit ausschöpfen zu können, wird von der Abtastvorrichtung regelmäßig eine Positioniergenauigkeit von 1 nm oder darunter mit einer entsprechenden Reproduzierbarkeit gefordert. Andererseits sind Positionierzeiten im Mikrosekundenbereich bevorzugt, um ein schnelles Abtasten und eine schnelle Abfolge von Lokalisierungen des Partikels erreichen zu können. Diese Präzisions- und Geschwindigkeitsanforderungen an die Abtastvorrichtung des erfindungsgemäßen Lichtmikroskops lassen sich mit mechanischen Strahlablenkeinheiten wie Galvospiegeln allein nicht oder nur unzureichend erfüllen. Für die Abtastvorrichtung eignen sich daher Strahlablenkeinheiten, die ohne bewegliche Teile auskommen, beispielsweise elektrooptische Deflektoren (EOD) oder elektroakustische Deflektoren. Mit diesen sind die gewünschten Positionierzeiten problemlos erreichbar, allerdings sind die maximalen Ablenkwinkel sehr begrenzt. Aus diesem Grund weist eine bevorzugte Ausführungsform des erfindungsgemäßen Lichtmikroskops im Strahlengang sowohl einen Galvoscanner auf, mit dem der Strahl über größere Bildfelder positioniert werden kann, als auch einen elektrooptischen Deflektor, mit dem das (schnelle) Abtasten der einzelnen Partikel vorgenommen wird. Alternativ kann eine Vorrichtung vorhanden sein, die die Funktionalität des Scanners und der Strahlablenkeinrichtung integriert; eine solche Vorrichtung kann beispielsweise durch einen deformierbaren Spiegel ausgebildet sein. In weiteren alternativen Ausführungsformen könnte die Funktion des Scanners beispielsweise von einem verfahrbaren Probentisch übernommen werden.

In einer bevorzugten Ausführungsform des Lichtmikroskops ist die zweite Messgröße ebenfalls eine optische Messgröße, beispielsweise eine (weitere) Fluoreszenz eines (weiteren) Fluoreszenzmarkers in der Probe. Die Detektion dieser (weiteren) Fluoreszenz erfolgt bevorzugt in einem anderen Wellenlängenbereich als die Emission des Partikels infolge der Beleuchtung mit dem Abtastlicht, um beide Größen voneinander trennen zu können. Sofern eine zeitlich oder spektral getrennte Anregung der Emission des Partikels und des (weiteren) Fluoreszenzmarkers möglich ist, können beide Detektionskanäle allerdings auch identisch bzw. nicht separat ausgebildet sein. Neben einer Fluoreszenz können auch andere optische Signale als zweite Messgröße erfasst werden, insbesondere *Second-Harmonic-Generation-Signale* (SHG), *Third-Harmonic-Generation-Signale* (THG), Rayleigh- oder Raman-Streulichtsignale, kohärente Anti-Stokes Raman-Streulichtsignale (CARS), Reflexionslichtsignale, Differentialinterferenzkontrastsignale (DIC) oder Polarisationskontrastsignale.

Die meisten der Ausführungsformen, bei denen die zweite Messgröße ebenfalls eine optische Messgröße ist, erfordern eine oder mehrere weitere Lichtquellen, mit denen das als zweite Messgröße erfasste Signal in der Probe generiert wird. Daher weist das Lichtmikroskop gemäß einer Ausführungsform eine weitere Lichtquelle auf, die dazu ausgebildet ist, das als zweite Messgröße erfasste Signal in der Probe zu generieren. Bei dieser weiteren Lichtquelle / diesen weiteren Lichtquellen kann es sich beispielsweise um Laser zur Anregung einer Fluoreszenz oder um Ultrakurzpulslaser zur Erzeugung eines SHG- oder THG-Signals handeln. Das Licht der weiteren Lichtquelle(n) kann zusammen mit dem Abtastlicht durch ein einziges Objektiv in die Probe gerichtet werden; es ist aber auch möglich, die Probe durch eine separate Optik mit dem Licht der weiteren Lichtquelle(n) zu beleuchten. Diese separate Optik kann ein zweites Objektiv sein, das dem Objektiv zur Beleuchtung der Probe mit dem Abtastlicht gegenübersteht oder in einem Winkel zu diesem angeordnet sein kann, so dass sich das Abtastlicht und das Licht zur Generierung der zweiten Messgröße in einem Winkel zwischen 15° und 165°, bevorzugt in einem Winkel zwischen 45° und 135° und besonders bevorzugt in einem Winkel zwischen 80° und 100° in der Probe schneiden. Eine derartige Konfiguration ist beispielsweise in einem Lichtblattmikroskop realisiert. Somit ist das Licht der weiteren Lichtquelle gemäß einer Ausführungsform in einem Winkel zwischen 15° und 165°, bevorzugt in einem Winkel zwischen 45° und 135°, besonders bevorzugt in einem Winkel zwischen 80° und 100° zur Einstrahlrichtung des Abtastlichts in die Probe gerichtet.

In einer alternativen Ausführungsform ist die zweite Messgröße eine nicht-optische Messgröße. Bevorzugte nicht-optische Messgrößen sind insbesondere elektrische Messgrößen, also elektrische Spannungen, elektrische Ströme, elektrische Kapazitäten, elektrische Induktivitäten oder Frequenzen, Amplituden oder Phasen elektrischer Spannung, elektrischer Ströme oder elektromagnetischer Wechselfelder. Gemäß einer Ausführungsform ist die zweite Messgröße also eine nicht-optische Messgröße, insbesondere eine elektrische Messgröße, insbesondere eine elektrische Spannung, ein elektrischer Strom, ein elektrischer Widerstand, eine elektrische Kapazität, eine elektrische Induktivität oder eine Frequenz, eine Phase oder eine Amplitude einer elektrischen Wechselspannung, eines elektrischen Wechselstroms oder eines elektromagnetischen Wechselfeldes. Ein elektrischer Strom kann beispielsweise in einer *Patch* Clamp-Anordnung gemessen werden, bei der mit einer Mikropipette ein einzelner Ionenkanal in der Zellmembran einer zu untersuchenden Zelle vom umgebenden Medium elektrisch isoliert wird und der Strom durch den Ionenkanal mit einer Elektrode gemessen und nach Aufbereitung mit einem empfindlichen Messverstärker in einen Kontrollwert zur Durchführung des erfindungsgemäßen Verfahrens gewandelt wird.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

**Kurzbeschreibung der Figuren**

Fig. 1 zeigt schematisch den Ablauf des erfindungsgemäßen Verfahrens.

Fig. 2 zeigt verschiedene Möglichkeiten der Aufnahme einer zweiten Messgröße.

Fig. 3 zeigt ein erfindungsgemäßes Lichtmikroskop.

**Beschreibung der Figuren**

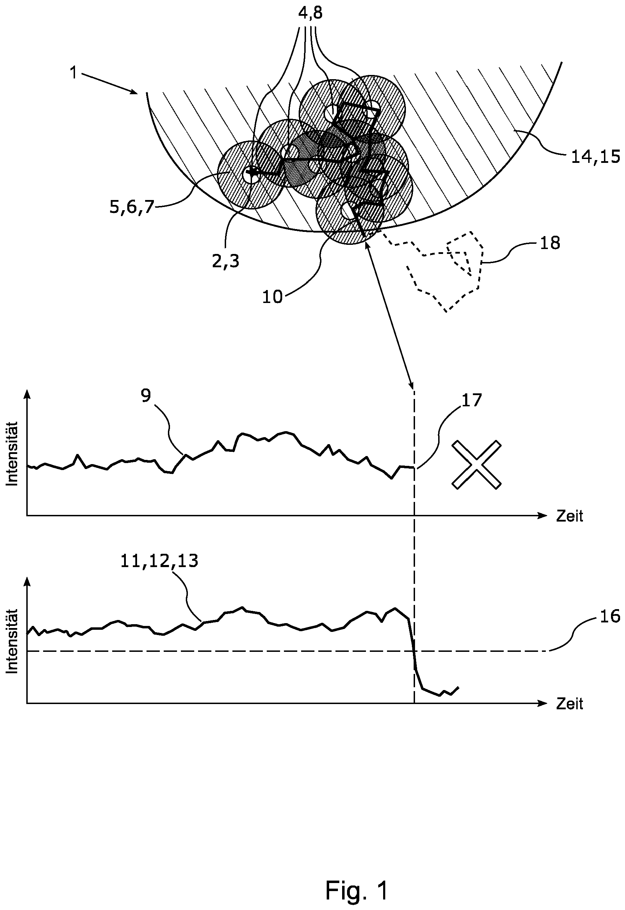

Fig. 1 zeigt einen Ausschnitt einer Zelle 1, innerhalb derer sich ein Partikel 2 befindet, dessen Bewegung verfolgt werden soll. Die Anfangsposition 3 dieses Partikels ist zumindest näherungsweise bekannt (beispielsweise aus einem zuvor aufgenommenen, hier nicht gezeigten Weitfeldbild), so dass mit der Abtastung des Partikels 2 an der Anfangsposition 3 begonnen werden kann. Hierzu wird das Partikel mit einem Abtastlicht 5 an mehreren Abtastpositionen 4 beleuchtet, von denen in der Figur nur einige beispielhaft eingezeichnet sind. Erfindungsgemäß weist das Abtastlicht 5 eine Intensitätsverteilung 7 mit einem lokalen Intensitätsminimum 8 auf. Das Partikel 2 ist hier konkret ein fluoreszentes Partikel, das bei Beleuchtung mit dem Abtastlicht 5, das somit ein Anregungslicht 6 ist, zur Abgabe einer Fluoreszenz 9 angeregt wird. Das Abtastlicht 5 könnte alternativ auch eine Überlagerung von Anregungslicht 6 mit einer ein lokales Intensitätsminimum 8 aufweisenden Intensitätsverteilung 7 von Fluoreszenzverhinderungslicht, insbesondere Stimulationslicht, sein. Alternativ könnte das Partikel auch ein lichtstreuendes Partikel sein. Statt der Fluoreszenz 9 würde dann bei der Beleuchtung des Partikels 2 mit dem Abtastlicht 5 ein Streulichtsignal detektiert.

An jeder der Abtastpositionen 4 wird die von dem fluoreszenten Partikel 2 emittierte Fluoreszenz 9 detektiert, und auf Grundlage der letzten Abtastposition(en) und der jeweils detektierten Anzahl(en) von Fluoreszenzphotonen bzw. der detektierten Fluoreszenzintensität werden aktualisierte Koordinaten des fluoreszenten Partikels 2 bestimmt und eine oder mehrere weitere Abtastpositionen 4 festgelegt. Dabei kann die Aktualisierung der Koordinaten des Partikels 2 jeweils nach dem Abtasten an mehreren Abtastpositionen 4 erfolgen, es kann aber auch auf jedes einzelne detektierte Fluoreszenzphoton reagiert werden, indem die Koordinaten des fluoreszenten Partikels 2 aktualisiert und die nachfolgende(n) Abtastposition(en) festgelegt werden. Durch Aneinanderfügen der nacheinander bestimmten Koordinaten entsteht so die Trajektorie 10 des fluoreszenten Partikels 2.

Erfindungsgemäß wird während des Abtastens des fluoreszenten Partikels 2 eine zweite Messgröße 11 als Kontrollwert 12 detektiert, hier ebenfalls eine Fluoreszenz 13 eines weiteren Fluoreszenzfarbstoffs 14, mit dem eine Färbung 15 der Zelle 1 vorgenommen wurde. Der weitere Fluoreszenzfarbstoff 14 ist dabei so gewählt, dass seine Fluoreszenz 13 in einem anderen Wellenlängenbereich als die Fluoreszenz 9 des Partikels 2 erfolgt und die an den Abtastpositionen 4 von dem Partikel 2 detektierte Fluoreszenz 9 nicht beeinflusst. Sofern an der jeweils aktuellen Abtastposition 4 eine Fluoreszenz 13 dieses weiteren Fluoreszenzfarbstoffs 14 oberhalb eines Minimalwerts 16 detektiert wird, zeigt dies an, dass sich das verfolgte Partikel 2 innerhalb der Zelle 1 bewegt, und die Aufnahme der Trajektorie 10 durch Abtasten des Partikels 2 wird fortgesetzt. Sobald die Fluoreszenz 13 des Fluoreszenzfarbstoffs 14 jedoch unter den Minimalwert 16 fällt, zeigt dies an, dass sich das Partikel 2 außerhalb der Zelle 1 befindet, und es erfolgt ein Abbruch 17 des Abtastens. Die weitere Trajektorie 18 des Partikels 2 außerhalb der Zelle 1 wird nicht weiter verfolgt.

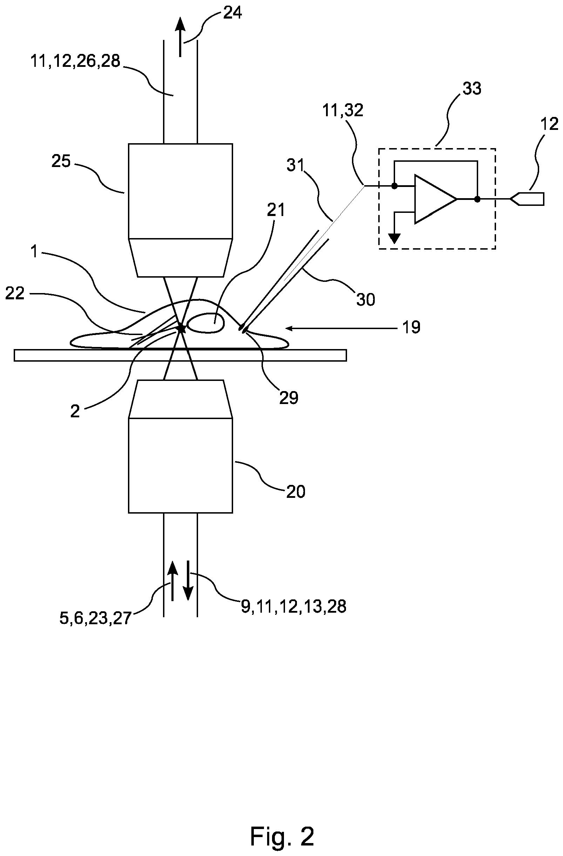

**Fig. 2** zeigt schematisch eine Auswahl verschiedener zweiter Messgrößen 11, um ein Abbruchkriterium für das Verfolgen einzelner Partikel 2 in der Probe 19 festzulegen. Wenngleich ein Kontrollwert auch aus mehreren Messgrößen abgeleitet werden kann, so sind die in der Figur gezeigten Messgrößen primär als Alternativen zu betrachten.

In der dargestellten Ausführungsform wird die Probe 19 über ein Objektiv 20 von unten mit dem Abtastlicht 5 beleuchtet (inverse Konfiguration). In der Probe befindet sich eine Zelle 1, in der der Zellkern 21 und einige Filamente 22 exemplarisch für die Zellorganellen der Zelle 1 gezeigt sind. Gezeigt ist weiterhin ein fluoreszentes Partikel 2, dessen Trajektorie durch Abtasten mit dem Abtastlicht 5 an verschiedenen Abtastpositionen in der Zelle 1 aufgenommen wird. Hierzu wird das fokussierte Abtastlicht 5 in der Probe 19 durch das Verkippen des Lichtstrahls 23 des Abtastlichts 5 mit einer (nicht gezeigten) Strahlablenkvorrichtung an die Abtastpositionen verlagert. Die von dem fluoreszenten Partikel 2 emittierte Fluoreszenz 9 wird mit dem Objektiv 20 gesammelt und mit einem (nicht gezeigten) Detektor detektiert.

Während des Abtastens und des Verfolgens des fluoreszenten Partikels 2 in der Probe 19 erfolgt eine Aufnahme einer zweiten Messgröße 11, um ein Abbruchkriterium für das Abtasten festzulegen. Diese zweite Messgröße 11 kann ebenfalls eine Fluoreszenz 13 eines zweiten Fluoreszenzfarbstoffs sein, mit dem einzelne Bestandteile (z. B. Organellen) der Zelle 1 oder die gesamte Zelle 1 markiert ist. Zur Anregung dieses zweiten Fluoreszenzfarbstoffs erforderliches Anregungslicht 6 kann in einem gemeinsamen Lichtstrahl 23 mit dem Abtastlicht 5 in die Probe 19 eingestrahlt werden; auch die Fluoreszenz 13 des zweiten Farbstoffs kann mit dem Objektiv 20 gesammelt werden. Die Fluoreszenz 13 dient dann als Kontrollwert 12, auf Basis dessen ein Abbruchkriterium für das Abtasten und Verfolgen des fluoreszenten Partikels 2 festgelegt wird. Dieses Abbruchkriterium kann beispielsweise das Unterschreiten eines Minimalwerts des Kontrollwerts 12 sein, wodurch angezeigt wird, dass das fluoreszente Partikel 2 sich von der mit dem zweiten Fluoreszenzfarbstoff markierten Zelle 1 bzw. der Zellorganelle entfernt hat.

Statt einer Fluoreszenz 13 kann die zweite Messgröße 11 auch in Transmissionsrichtung 24 mit einem zweiten Objektiv 25 aufgefangenes und mit einem (nicht gezeigten) weiteren Detektor detektiertes Durchlicht 26 sein, dessen Intensität als Kontrollwert 12 zur Festlegung des Abbruchkriteriums dient. Als Durchlicht 26 kann dabei das durch die Probe transmittierte Abtastlicht 5 detektiert werden, es ist aber auch möglich, ein weiteres Beleuchtungslicht 27 mit dem Abtastlicht 5 in die Probe 19 einzustrahlen. Die Beleuchtung mit dem weiteren Beleuchtungslicht 27 kann außer als Hellfeldfeldbeleuchtung auch in Form einer Dunkelfeldbeleuchtung erfolgen; auf diese Weise kann gegebenenfalls ein besserer Kontrast des Kontrollwerts erzielt werden. Auch kann der Durchlichtkontrast durch die Anordnung von Polarisatoren im Beleuchtungs- und Durchlichtstrahlengang als Polarisationskontrast ausgeführt werden. Schließlich kann das Beleuchtungslicht 27 auch so gewählt werden, dass in der Probe ein nichtlineares optisches Signal, insbesondere ein SHG-Signal 28 (*Second Harmonic Generation*) oder ein THG-Signal (*Third Harmonic Generation*) erzeugt wird.

Die zweite Messgröße 11 muss nicht notwendigerweise eine optische Messgröße sein. Als Kontrollwert 12 kann beispielsweise auch eine elektrische Messgröße, insbesondere ein elektrischer Strom 32 oder eine elektrische Spannung dienen. In der Darstellung ist hierzu exemplarisch die Ableitung eines Stroms durch einen Ionenkanal 29 in einer *Patch-Clamp*-Anordnung dargestellt. Dazu wird ein einzelner Ionenkanal 29 mit einer Mikropipette 30 gegenüber dem umgebenden Medium isoliert und der Ionenstrom durch den Ionenkanal 29 mit einer Elektrode 31 abgeleitet und als elektrischer Strom 32 detektiert. Das mit einem Messverstärker 33 aufbereitete Signal kann als Kontrollwert 12 dienen, um ein Abbruchkriterium für das Abtasten und das Verfolgen des fluoreszenten Partikels 2 in der Probe 19 festzulegen. In dem gezeigten Beispiel kann das Verfolgen des fluoreszenten Partikels 2 so auf Intervalle beschränkt werden, in denen der Ionenkanal 29 aktiv ist.

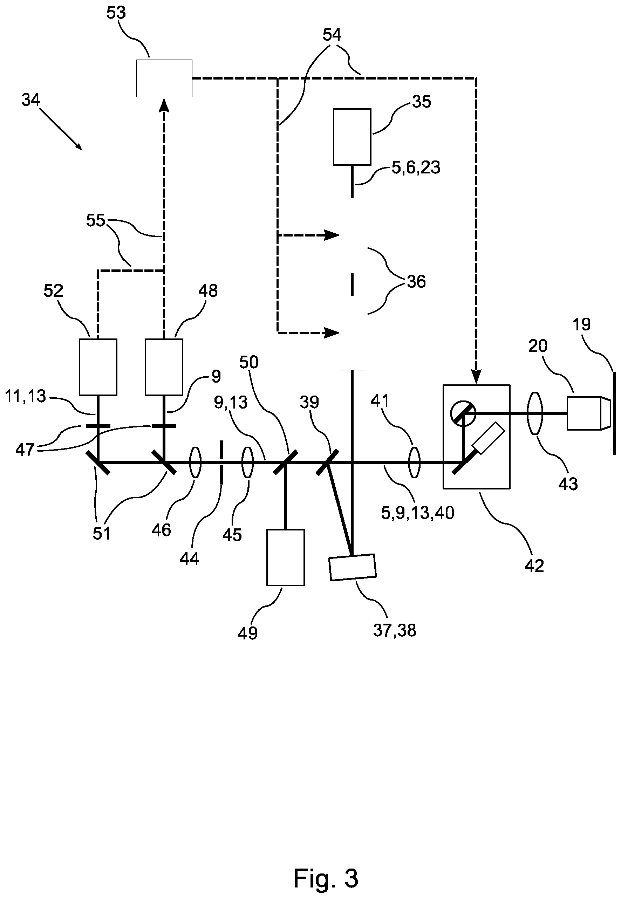

**Fig. 3** zeigt schematisch den Aufbau eines Lichtmikroskops, das hier als Fluoreszenzmikroskop 34 ausgeführt ist, zur Durchführung des erfindungsgemäßen Verfahrens. Die Laserlichtquelle 35 stellt Abtastlicht 5 bereit, das hier Anregungslicht 6 zur Fluoreszenzanregung ist. Der Lichtstrahl 23 des Abtastlichts 5 durchläuft eine Strahlablenkeinrichtung, hier ausgeführt in Form zweier nacheinander geschalteter elektrooptischer Deflektoren (EOD) 36 zur Ablenkung des Lichtstrahls 23 in der horizontalen bzw. vertikalen Richtung. Nach Durchlaufen der EODs 36 wird die Wellenfront mit einem separaten Phasenmodulationselement 37, hier in Form eines Flüssigkristallmodulators 38 (*Spatial Light Modulator,* SLM) so geformt, dass bei der nachfolgenden Fokussierung durch das Objektiv 20 eine ein lokales Intensitätsminimum aufweisende Intensitätsverteilung des Abtastlichts 5 in der Probe 19 resultiert. Der von dem Flüssigkristallmodulator 38 reflektierte bzw. gebeugte Lichtstrahl wird mit einem Strahleinkoppler 39 in einen Hauptstrahlengang 40 des Fluoreszenzmikroskops 34 eingekoppelt. Der Strahleinkoppler 39 ist vorteilhaft als schmalbandig reflektierender dielektrischer Notchfilter ausgeführt, dessen Reflexionsbereich möglichst wenig mit dem Wellenlängenbereich der Fluoreszenz 9 überlappt, so dass nur geringe Anteile der im Hauptstrahlengang 40 in Gegenrichtung zum Abtastlicht 5 verlaufenden Fluoreszenz 9 aus dem Hauptstrahlengang 40 ausgespiegelt werden. Das Abtastlicht 5 wird mit einer Scanlinse 41, einem Scanner 42 sowie einer Tubuslinse 43 in die rückwärtige Apertur des Objektivs 20 gelenkt.

In der gezeigten Konfiguration dient der auf Galvanometern basierende Scanner 42 einer vergleichsweise langsamen, aber über ein großes Bildfeld möglichen Grobpositionierung des fokussierten Abtastlichts 5 auf ein fluoreszentes Partikel in der Probe, während die EODs 36 der schnellen Positionierung des Intensitätsminimums im Nahbereich um das fluoreszente Partikel dienen. Dabei erlauben die EODs 36 eine Positionierung mit hoher Geschwindigkeit, allerdings mit einem auf wenige Mikrometer beschränkten Positionierbereich. Die von dem Objektiv 20 aus der Probe 19 empfangene Fluoreszenz 9 propagiert entlang des Hauptstrahlengangs 40 in dem Abtastlicht 5 entgegengesetzter Richtung. Die Fluoreszenz 9 wird mit einer Linse 45 durch eine konfokale Lochblende 44 fokussiert, mit einer weiteren Linse 46 kollimiert, mit einem Filter 47 von Streulicht getrennt und mit einen Detektor 48 detektiert.

In dem Fluoreszenzmikroskop 34 ist ein zweiter Fluoreszenzkanal zur Detektion der Fluoreszenz 13 eines zweiten Fluoreszenzfarbstoffs vorgesehen, wobei die Fluoreszenz 13 die zweite Messgröße 11 zur Festlegung eines Abbruchkriteriums für die Abtastung einzelner fluoreszenter Partikel in der Probe 19 ist. Hierzu verfügt das Fluoreszenzmikroskop 34 über eine weitere Lichtquelle 49, deren Licht mit einem zweiten Strahleinkoppler 50 in den Hauptstrahlengang 40 eingekoppelt wird. Die durch das Licht der Lichtquelle 49 angeregte Fluoreszenz 13 des zweiten Fluoreszenzfarbstoffs wird von der Fluoreszenz 9 des fluoreszenten Partikels mit einem Strahlteiler 51 getrennt und nach Filterung durch einen Filter 47 mit dem Detektor 52 detektiert. Das Fluoreszenzmikroskop 34 verfügt weiter über eine Steuereinheit 53, die Steuersignale 54 zur Ansteuerung des Scanners 42 und der EODs 36 erzeugt, sowie die Detektorsignale 55 der Detektoren 48, 52 empfängt. Die Steuereinrichtung 53 ist eingerichtet, das Abtastlicht 5 mit dem Scanner 42 an einzelnen fluoreszenten Partikeln zu positionieren und einzelne Partikel in der Probe zu verfolgen, indem diese wiederholt mit dem Abtastlicht 5 in einem Nahbereich abgetastet und Positionsbestimmungen aus den Abtastpositionen und an den Abtastpositionen detektierten Intensitäten oder Photonenzahlen der Fluoreszenz 9 durchgeführt werden. Während des Verfolgens einzelner fluoreszenter Partikel empfängt die Steuereinheit 53 eine Fluoreszenz 13 als zweite Messgröße aus der Probe 19 und bricht das Verfolgen eines Partikels bei Erreichen eines Abbruchkriteriums, das hier das Unterschreiten einer Mindestintensität der zweiten Messgröße, also der Fluoreszenz 13 ist, ab.

**Bezugszeichenliste**

| | |
|----|---|
| 1 | Zelle |
| 2 | Partikel |
| 3 | Anfangsposition |
| 4 | Abtastposition |
| 5 | Abtastlicht |
| 6 | Anregungslicht |
| 7 | Intensitätsverteilung |
| 8 | lokales Intensitätsminimum |
| 9 | Fluoreszenz |
| 10 | Trajektorie |
| 11 | zweite Messgröße |
| 12 | Kontrollwert |
| 13 | Fluoreszenz |
| 14 | Fluoreszenzfarbstoff |
| 15 | Färbung |
| 16 | Minimalwert |
| 17 | Abbruch |
| 18 | Trajektorie |
| 19 | Probe |
| 20 | Objektiv |
| 21 | Zellkern |
| 22 | Filamente |
| 23 | Lichtstrahl |
| 24 | Transmissionsrichtung |
| 25 | Objektiv |
| 26 | Durchlicht |
| 27 | Beleuchtungslicht |
| 28 | Second Harmonic Generation (SHG)-Licht |
| 29 | Ionenkanal |
| 30 | Mikropipette |
| 31 | Elektrode |
| 32 | elektrischer Strom |
| 33 | Messverstärker |
| 34 | Lichtmikroskop |
| 35 | Lichtquelle |
| 36 | Elektrooptischer Deflektor (EOD) |
| 37 | Phasenmodulationselement |
| 38 | Flüssigkristallmodulator |
| 39 | Strahleinkoppler |
| 40 | Hauptstrahlengang |
| 41 | Scanlinse |
| 42 | Scanner |
| 43 | Tubuslinse |
| 44 | Lochblende |
| 45 | Linse |
| 46 | Linse |
| 47 | Filter |
| 48 | Detektor |
| 49 | Lichtquelle |
| 50 | Strahleinkoppler |
| 51 | Strahlteiler |
| 52 | Detektor |
| 53 | Steuereinheit |
| 54 | Steuersignal |
| 55 | Detektorsignal |

**Patentansprüche**

1. Verfahren zur Aufnahme einer Trajektorie (10) eines einzelnen Partikels (2) in einer Probe (19) ausgehend von einer zumindest näherungsweise bekannten Anfangsposition (3) des Partikels (2), umfassend die wiederholt ausgeführten Verfahrensschritte:

   - Abtasten des Partikels (2) mit einer ein lokales Minimum (8) aufweisenden Intensitätsverteilung (7) eines Abtastlichts (5) an einer oder mehreren Abtastpositionen (4);
   - Detektieren einer von dem Partikel (2) infolge der Beleuchtung mit dem Abtastlicht (5) an jeder der Abtastpositionen (4) emittierten Anzahl von Photonen oder einer Lichtintensität als eine erste Messgröße;
   - Bestimmen aktualisierter Koordinaten des Partikels aus der an den Abtastpositionen (4) detektierten Photonenzahl oder der detektierten Lichtintensität und Hinzufügen der aktualisierten Koordinaten zu der Trajektorie (10),

   **dadurch gekennzeichnet, dass** während der Aufnahme der Trajektorie (10) eine zweite Messgröße (11) in der Probe (19) erfasst wird und die Aufnahme der Trajektorie (10) unterbrochen oder beendet wird, wenn die zweite Messgröße (11) oder ein aus der zweiten Messgröße (11) berechneter Kontrollwert (12) ein Abbruchkriterium erfüllt.

2. Verfahren nach Anspruch 1, **dadurch gekennzeichnet, dass** die optische Leistung des Abtastlichts (5) im Laufe mehrerer Bestimmungen aktualisierter Koordinaten des Partikels (2) angepasst, insbesondere erhöht wird.

3. Verfahren nach Anspruch 1 oder 2, **dadurch gekennzeichnet, dass** das Partikel (2) ein fluoreszentes Partikel oder ein fluoreszentes Farbstoffmolekül ist, insbesondere wobei das Abtastlicht (5) ein Fluoreszenzanregungslicht ist, das das Partikel zur Fluoreszenz anregt oder das Abtastlicht (5) eine Überlagerung eines Fluoreszenzanregungslichts und eines Fluoreszenzverhinderungslichts ist, wobei das Fluoreszenzverhinderungslicht die Intensitätsverteilung (7) mit dem lokalen Intensitätsminimum (8) aufweist.

4. Verfahren einem der Ansprüche 1 bis 3, **dadurch gekennzeichnet, dass** das Partikel (2) für jede Aktualisierung seiner Koordinaten an mehreren Abtastpositionen (4) in einem Nahbereich um die zuletzt bestimmten Koordinaten abgetastet wird.

5. Verfahren nach einem der Ansprüche 1 bis 3, **dadurch gekennzeichnet, dass** die Koordinaten des Partikels (2) nach jedem Abtasten des Partikels (2) an einer Abtastposition (4) aktualisiert werden.

6. Verfahren nach einem der Ansprüche 1 bis 5, **dadurch gekennzeichnet, dass** das Abbruchkriterium erfüllt ist, wenn die zweite Messgröße (11) oder der Kontrollwert (12) einen Minimalwert (16) unterschreitet oder einen Maximalwert überschreitet, insbesondere wobei das Abtasten fortgesetzt wird, wenn die zweite Messgröße (11) oder der Kontrollwert (12) den Minimalwert (16) wieder überschreitet bzw. den Maximalwert wieder unterschreitet.

7. Verfahren nach einem der Ansprüche 1 bis 6, **dadurch gekennzeichnet, dass** die zweite Messgröße (11) an der Position des Abtastlichts (5) in der Probe (19) detektiert wird.

8. Verfahren nach einem der Ansprüche 1 bis 7, **dadurch gekennzeichnet, dass** die zweite Messgröße (11) in einer Umgebung um die aktuellen Koordinaten des Partikels (2) in der Probe (19) detektiert wird.

9. Verfahren nach einem der Ansprüche 1 bis 6, **dadurch gekennzeichnet, dass** die zweite Messgröße (11) an einer ortsfesten Position oder in einem ortsfesten Bereich der Probe (19) detektiert wird.

10. Verfahren nach einem der Ansprüche 1 bis 9, **dadurch gekennzeichnet, dass** die zweite Messgröße (11) eine optische Messgröße ist.

11. Verfahren nach Anspruch 10, **dadurch gekennzeichnet, dass** die zweite Messgröße (11) ein Fluoreszenzsignal ist, insbesondere wobei der Kontrollwert (12) aus dem Fluoreszenzsignal und einem weiteren Fluoreszenzsignal, insbesondere aus dem Verhältnis dieser Signale, berechnet wird.

12. Verfahren nach Anspruch 11, **dadurch gekennzeichnet, dass** der Kontrollwert (12) eine aus der Fluoreszenzintensität oder aus der Fluoreszenzlebensdauer des Fluoreszenzsignals oder der Fluoreszenzsignale berechnete Größe, insbesondere ein pH-Wert, eine Ionenkonzentration, ein Membranpotenzial oder eine Fluoreszenzanisotropie ist.

13. Verfahren nach einem der Ansprüche 1 bis 9, **dadurch gekennzeichnet, dass** die zweite Messgröße (11) eine elektrische Messgröße, insbesondere eine elektrische Spannung, ein elektrischer Strom (32), ein elektrischer Widerstand, eine elektrische Kapazität, eine elektrische Induktivität oder eine Frequenz, eine Phase oder eine Amplitude einer elektrischen Wechselspannung, eines elektrischen Wechselstroms oder eines elektromagnetischen Wechselfeldes ist.

14. Verfahren nach einem der Ansprüche 1 bis 13, **dadurch gekennzeichnet, dass** die zweite Messgröße (11) oder der aus der zweiten Messgröße (11) berechnete Kontrollwert (12) ein Viabilitäts-, Vitalitäts- oder Zellzyklusindikator einer in der Probe (19) befindlichen Zelle (1) ist.

15. Lichtmikroskop (34) mit

   - einem Objektiv (20),
   - einer Lichtquelle (35) für Abtastlicht (5),
   - Strahlformungsmitteln zur Ausbildung einer ein lokales Intensitätsminimum (8) aufweisenden Intensitätsverteilung (7) des Abtastlichts (5) in einer Probe (19),
   - einer Abtastvorrichtung zur Positionierung des Abtastlichts (5) in der Probe (19),
   - einem Detektionskanal zur Erfassung einer ersten, optischen Messgröße in der Probe (19),
   - einem Detektionskanal zur Erfassung einer zweiten Messgröße (11) in der Probe,

   **dadurch gekennzeichnet, dass** das Lichtmikroskop (34) eingerichtet ist, ein Verfahren nach einem der Ansprüche 1 bis 14 auszuführen.

**Claims**

1. A method for recording a trajectory (10) of an individual particle (2) in a sample (19) starting from an at least approximately known initial position (3) of the particle (2), comprising the repeatedly executed method steps:

   - scanning the particle (2) with an intensity distribution (7) of a scanning light (5) comprising a local minimum (8) at one or more scanning positions (4);
   - detecting a number of photons emitted from the particle (2) as a result of the illumination with the scanning light (5) at each of the scanning positions (4) or a light intensity as a first measured variable;
- determining updated coordinates of the particle from the photon number detected at the scanning positions (4) or the detected light intensity and adding the updated coordinates to the trajectory (10),

**characterized in that** during the recording of the trajectory (10) a second measured variable (11) is detected in the sample (19) and the recording of the trajectory (10) is interrupted or terminated if the second measured variable (11) or a control value (12) calculated from the second measured variable (11) fulfills a termination criterion.

2. The method according to claim 1, **characterized in that** the optical power of the scanning light (5) is adapted, in particular increased, in the course of several determinations of updated coordinates of the particle (2).

3. The method according to claim 1 or 2, **characterized in that** the particle (2) is a fluorescent particle or a fluorescent dye molecule, particularly wherein the scanning light (5) is a fluorescence excitation light that excites the particle to fluoresce, or the scanning light (5) is a superposition of a fluorescence excitation light and a fluorescence inhibition light, wherein the fluorescence inhibition light comprises the intensity distribution (7) comprising the local intensity minimum (8).

4. The method according to one of the claims 1 to 3, **characterized in that** the particle (2) is scanned for each update of its coordinates at a plurality of scanning positions (4) in a close range around the last determined coordinates.

5. The method according to one of the claims 1 to 3, **characterized in that** the coordinates of the particle (2) are updated after each scanning of the particle (2) at a scanning position (4).

6. The method according to one of the claims 1 to 5, **characterized in that** the termination criterion is fulfilled if the second measured variable (11) or the control value (12) falls below a minimum value (16) or exceeds a maximum value, particularly wherein the scanning is continued if the second measured variable (11) or the control value (12) exceeds the minimum value (16) again or falls below the maximum value again.

7. The method according to one of the claims 1 to 6, **characterized in that** the second measured variable (11) is detected at the position of the scanning light (5) in the sample (19).

8. The method according to one of the claims 1 to 7, **characterized in that** the second measured variable (11) is detected in a vicinity around the current coordinates of the particle (2) in the sample (19).

9. The method according to one of the claims 1 to 6, **characterized in that** the second measured variable (11) is detected at a stationary position or in a stationary region of the sample (19).

10. The method according to one of the claims 1 to 9, **characterized in that** the second measured variable (11) is an optical measured variable.

11. The method according to claim 10, **characterized in that** the second measured variable (11) is a fluorescence signal, particularly wherein the control value (12) is calculated from the fluorescence signal and a further fluorescence signal, in particular from the ratio of these signals.

12. The method according to claim 11, **characterized in that** the control value (12) is a quantity calculated from the fluorescence intensity or from the fluorescence lifetime of the fluorescence signal or signals, in particular a pH value, an ion concentration, a membrane potential or a fluorescence anisotropy.

13. The method according to one of the claims 1 to 9, **characterized in that** the second measured variable (11) is an electrical measured variable, in particular an electrical voltage, an electrical current (32), an electrical resistance, an electrical capacitance, an electrical inductance, or a frequency, a phase, or an amplitude of an alternating electrical voltage, an alternating electrical current, or an alternating electromagnetic field.

14. The method according to one of the claims 1 to 13, **characterized in that** the second measured variable (11) or the control value (12) calculated from the second measured variable (11) is a viability, vitality or cell cycle indicator of a cell (1) located in the sample (19).

15. A light microscope (34) comprising

- an objective (20),
- a light source (35) for scanning light (5),
- beam shaping means for forming an intensity distribution (7) of the scanning light (5) comprising a local intensity minimum (8) in a sample (19),
- a scanning device for positioning the scanning light (5) in the sample (19),
- a detection channel for detecting a first, optical measured variable in the sample (19),
- a detection channel for detecting a second measured variable (11) in the sample,

**characterized in that** the light microscope (34) is configured to perform a method according to one of claims 1 to 14.

**Revendications**

1. Procédé pour acquérir une trajectoire (10) d'une particule individuelle (2) dans un échantillon (19) à partir d'une position initiale (3) au moins approximativement connue de la particule (2), comprenant les étapes de procédé exécutées de manière répétée :

  - le balayage de la particule (2) avec une distribution d'intensité (7), présentant un minimum local (8), d'une lumière de balayage (5) à une ou plusieurs positions de balayage (4) ;
  - la détection d'un nombre de photons ou d'une intensité lumineuse émis par la particule (2) en raison de l'illumination par la lumière de balayage (5) à chacune des positions de balayage (4) en tant que première quantité mesurée ;
  - déterminer des coordonnées actualisées de la particule à partir du nombre de photons détecté aux positions de balayage (4) ou de l'intensité lumineuse détectée et ajouter les coordonnées actualisées à la trajectoire (10),

  **caractérisé en ce que**, pendant l'acquisition de la trajectoire (10), une deuxième quantité mesurée (11) est enregistrée dans l'échantillon (19) et l'acquisition de la trajectoire (10) est interrompu ou terminé lorsque la deuxième quantité mesurée (11) ou une valeur de contrôle (12) calculée à partir de la deuxième quantité mesurée (11) remplit un critère d'interruption.

2. Procédé selon la revendication 1, **caractérisé en ce que** la puissance optique de la lumière de balayage (5) est adaptée, en particulier augmentée, au cours de plusieurs déterminations de coordonnées actualisées de la particule (2).

3. Procédé selon la revendication 1 ou 2, **caractérisé en ce que** la particule (2) est une particule fluorescente ou une molécule de colorant fluorescente, en particulier dans lequel la lumière de balayage (5) est une lumière d'excitation de la fluorescence, qui excite la particule à la fluorescence ou la lumière de balayage (5) est une superposition d'une lumière d'excitation de la fluorescence et d'une lumière d'inhibition de la fluorescence, la lumière d'inhibition de la fluorescence présentant la distribution d'intensité (7) avec le minimum d'intensité local (8).

4. Procédé selon l'une des revendications 1 à 3, **caractérisé en ce que**, pour chaque actualisation de ses coordonnées, la particule (2) est balayée à plusieurs positions de balayage (4) dans une zone proche autour des dernières coordonnées déterminées.

5. Procédé selon l'une des revendications 1 à 3, **caractérisé en ce que** les coordonnées de la particule (2) sont actualisées après chaque balayage de la particule (2) à une position de balayage (4).

6. Procédé selon l'une des revendications 1 à 5, **caractérisé en ce que** le critère d'interruption est satisfait lorsque la deuxième quantité mesurée (11) ou la valeur de contrôle (12) est inférieure à une valeur minimale (16) ou supérieure à une valeur maximale, en particulier le balayage étant poursuivi lorsque la deuxième quantité mesurée (11) ou la valeur de contrôle (12) est de nouveau supérieure à la valeur minimale (16) ou de nouveau inférieure à la valeur maximale.

7. Procédé selon l'une des revendications 1 à 6, **caractérisé en ce que** la deuxième quantité mesurée (11) est détectée à la position de la lumière de balayage (5) dans l'échantillon (19).

8. Procédé selon l'une des revendications 1 à 7, **caractérisé en ce que** la deuxième quantité mesurée (11) est détectée dans un environnement autour des coordonnées actuelles de la particule (2) dans l'échantillon (19).

9. Procédé selon l'une des revendications 1 à 6, **caractérisé en ce que** la deuxième quantité mesurée (11) est détectée à une position fixe ou dans une zone fixe de l'échantillon (19).

10. Procédé selon l'une des revendications 1 à 9, **caractérisé en ce que** la deuxième quantité mesurée (11) est une quantité mesurée optique.

11. Procédé selon la revendication 10, **caractérisé en ce que** la deuxième quantité mesurée (11) est un signal de fluorescence, en particulier dans lequel la valeur de contrôle (12) est calculée à partir du signal de fluorescence et d'un autre signal de fluorescence, en particulier à partir du rapport de ces signaux.

12. Procédé selon la revendication 11, **caractérisé en ce que** la valeur de contrôle (12) est une quantité calculée à partir de l'intensité de fluorescence ou de la durée de vie de fluorescence du signal de fluorescence ou des signaux de fluorescence, en particulier une valeur de pH, une concentration ionique, un potentiel de membrane ou une anisotropie de fluorescence.

**13.** Procédé selon l'une des revendications 1 à 9, **caractérisé en ce que** la deuxième quantité mesurée (11) est une quantité mesurée électrique, en particulier une tension électrique, un courant électrique (32), une résistance électrique, une capacité électrique, une inductance électrique ou une fréquence, une phase ou une amplitude d'une tension électrique alternative, d'un courant électrique alternatif ou d'un champ électromagnétique alternatif.

**14.** Procédé selon l'une des revendications 1 à 13, **caractérisé en ce que** la deuxième quantité mesurée (11) ou la valeur de contrôle (12) calculée à partir de la deuxième quantité mesurée (11) est un indicateur de viabilité, de vitalité ou de cycle cellulaire d'une cellule (1) se trouvant dans l'échantillon (19).

**15.** Microscope optique (34) avec

   - un objectif (20),
   - une source de lumière (35) pour la lumière de balayage (5),
   - des moyens de formation de faisceau pour former une distribution d'intensité (7) de la lumière de balayage (5) dans un échantillon (19), présentant un minimum d'intensité local (8),
   - un dispositif de balayage pour positionner la lumière de balayage (5) dans l'échantillon (19),
   - un canal de détection pour détecter une première quantité mesurée optique dans l'échantillon (19),
   - un canal de détection pour détecter une deuxième quantité mesurée (11) dans l'échantillon,

**caractérisé en ce que** le microscope optique (34) est adapté pour mettre en oeuvre un procédé selon l'une des revendications 1 à 14.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102011055367 A1
- DE 102017104736 B3
- WO 2009098272 A2
- CN 109308357 A

### In der Beschreibung aufgeführte Nicht-Patentliteratur

- **N. P. WELLS et al.** Time Resolved 3D Molecular Tracking in Live Cells. *Nano Lett.,* 2010, vol. 10, 4732
- **K. GWOSCH et al.** MINFLUX nanoscopy delivers 3D multicolor nanometer resolution in cells. *Nat. Methods,* 2020, vol. 17, 217
- **M. WEBER et al.** MINSTED fluorescence localization and nanoscopy. *bioRxiv,* 2020
- **VON L. MARTINEZ-MUÑOZ et al.** Separating Actin-Dependent Chemokine Receptor Nanoclustering from Dimerization Indicates a Role for Clustering in CXCR4 Signaling and Function. *Mol. Cell,* 2018, vol. 70, 106-119
- **VON F. BALZAROTTI et al.** Nanometer resolution imaging and tracking of fluorescent molecules with minimal photon fluxes. *Science,* 2017, vol. 355 (606